# EUROPÄISCHE PATENTSCHRIFT

(11) **EP 1 579 406 B1**
(45) Veröffentlichungstag und Bekanntmachung des Hinweises auf die Patenterteilung: **06.07.2016**
(21) Anmeldenummer: 03808253.3
(22) Anmeldetag: 31.12.2003
(51) Int. Cl.: G09B 23/30

(54) **INTERAKTIVE LEHR-UND LERNVORRICHTUNG MIT DREIDIMENSIONALEM MODELL**
INTERACTIVE TEACHING AND LEARNING DEVICE WITH THREE-DIMENSIONAL MODEL
DISPOSITIF INTERACTIF DE FORMATION ET D'APPRENTISSAGE AVEC MODELE TRIDIMENSIONNEL

(30) Priorität: 31.12.2002 DE 10261673
(43) Veröffentlichungstag der Anmeldung: 28.09.2005
(73) Patentinhaber: Riener, Robert, 85591 Vaterstetten (DE); Burgkart, Rainer, 80469 München (DE)
(72) Erfinder: Riener, Robert, 85591 Vaterstetten (DE); Burgkart, Rainer, 80469 München (DE)
(74) Vertreter: Müller, Thomas
(86) Internationale Anmeldenummer: PCT/DE2003/004292
(87) Internationale Veröffentlichungsnummer: WO 2004/061797

(56) Entgegenhaltungen:
- WO-A-02/37453
- WO-A-03/090179
- DE-A- 10 017 119
- US-A- 5 259 764

## Beschreibung

Die Erfindung betrifft eine Vorrichtung, die es erlaubt, vorzugsweise dreidimensionale Gegenstände, wie z. B. anatomische Modelle oder auch Modelle und Ausstellungsstücke für Museen und Messen zu erläutern und zu demonstrieren.

Im Bereich der medizinischen Ausbildung oder bei medizinischen Demonstrationen werden häufig anatomische Modelle aus Kunststoff oder anderen Materialien eingesetzt. Zur Erläuterung oder Hervorhebung bestimmter anatomischer Bereiche ist es häufig zweckmäßig, die entsprechenden Bereiche durch Beschriftungen oder farbliche Merkmale kenntlich zu machen.

Problematisch bei derartigen Modellen ist, dass aus Platzgründen die mittels Beschriftung zu vermittelnde Information nicht besonders umfangreich sein kann. Oft fehlt eine Beschriftung ganz, weil z. B. die Textur des Modells (Färbung, feine Gefäße, Nerven usw.) erkennbar bleiben soll. Die Namen und Informationen zu den entsprechenden Modellbereichen sind dann auf einem Blatt Papier aufgelistet. Die Zuordnung geschieht über Nummern, die auf dem Modell aufgezeichnet sind oder durch Skizzen oder Fotos, auf denen die entsprechenden Modellbereiche ersichtlich sind. Die Identifikation der interessierenden Modellbereiche ist daher häufig sehr umständlich und unübersichtlich.

Gleiche Probleme gibt es auch bei der Gestaltung von dreidimensionalen Demonstrationsmodellen, die in Museen oder auf Messen gezeigt werden, wobei es sich im Gegensatz zu den medizinischen Modellen auch um das Originalobjekt handeln kann, wie z. B. ein Oldtimer-Fahrzeug in einem Automuseum.

Auch bei diesen Museen- und Messemodellen ist es häufig zweckmäßig, zur Erläuterung, Beschreibung oder Hervorhebung bestimmter Bereiche oder Elemente des Modells, diese durch Beschriftungen oder farbliche Merkmale kenntlich zu machen. Häufig werden hierbei auch elektrische Schalter verwendet, die - bei Berührung am Modell oder entfernt davon - dafür sorgen, dass ein bestimmter Modellbereich mittels Glühlämpchen sichtbar gemacht oder durch einen aufleuchtenden Schriftzug erklärt werden. Für spezielle Anwendungen werden sogenannte Touchpads eingesetzt, die auf der Basis matrixförmig angeordneter Messfühler die Erfassung einer flächigen Kraftverteilung ermöglichen, vergleiche z. B. Dokument DE 36 42 088 C2. Der Nachteil derartiger Anordnungen besteht darin, dass sich zwischen dem berührten Modell und dem Bediener die Sensorkomponenten befinden, so dass häufig die ursprünglichen Berührungseigenschaften, wie Oberflächenbeschaffenheit, Form und Farbe verfälscht werden. Außerdem muß das zu berührende Modell bearbeitet werden, um die Messfühler zu befestigen. Dadurch wird das Modell verändert oder sogar beschädigt. Um eine ausreichend hohe räumliche Auflösung über den gesamten relevanten Modellbereich zu erzielen, muß zudem eine große Anzahl von druckempfindlichen Sensoren verwendet werden.

Teilweise behoben werden diese Nachteile bei der Verwendung von sogenannten Navigations- oder Trackingsystemen, die den Berührpunkt nicht modellseitig, sondern bedienerseitig, z. B. durch Tracking des Bedienerfingers oder des Instruments, erfassen. Der gerätetechnische Aufwand zur Detektion der Bedienerbewegungen ist jedoch unverhältnismäßig hoch.

In dem Dokument DE 100 17 119 A1 sind eine Apparatur und ein Verfahren zur Messung der Kraftwirkung an Zähnen, Zahnmodellen und/oder Implantaten beschrieben, wobei z. B. Zähne in geeigneter räumlicher Anordnung mit Aufnehmern zur Erfassung räumlicher Kraft- und/oder Drehmomentenkomponenten gekoppelt sind, sodass die auf einen Zahn wirkenden Kräfte und/oder Momente gemessen werden können.

Es ist die Aufgabe der Erfindung, verbesserte Modelle für Lern- und Demonstrationszwecke bereitzustellen, die insbesondere vorstehend aufgeführte Nachteile überwinden.

Diese Aufgabe wird mit einer Vorrichtung nach Anspruch 1 gelöst:
Ein 3D-Körper ist über wenigstens eine elektrische Mehrkomponenten Kraft- und Momentenmessvorrichtung fest mit der Umgebung verbunden. Bei einer Berührung des 3D-Körpers werden die auftretenden Kräfte und Momente in elektrische Messsignale umwandelt, die einer Speicher- und Auswerteelektronik zugeführt werden. In der Speicher- und Auswerteelektronik ist ein mathematisches Modell von der Geometrie des 3D-Körpers implementiert. Unter Geometrie soll nachfolgend mindestens jeder Bereich der Oberfläche des Modells verstanden werden, der berührt werden kann und erklärt werden soll, d. h. z. B. auch Körperhöhlungen bei einem Anatomiemodell.

Weiterhin ist ein aus dem Stand der Technik an sich bekannter Algorithmus implementiert, der aus den bei der Berührung ermittelten Kräften und Momenten die Stelle am 3D-Körper errechnet, die gerade z. B. mit einem Finger oder mit einer Nadel berührt wird.

Mittels einer Anzeigevorrichtung wird die errechnete Berührungsstelle angezeigt oder ausgegeben. Die Art der Anzeige und/oder der Ausgabe ist frei wählbar und wird gemäß dem zu erreichenden Zweck ausgebildet. Vorzugsweise werden optisch-visuelle und/oder akustische Anzeigevorrichtungen eingesetzt, die aus dem Stand der Technik bekannt sind.

Erfindungsgemäß weist die optisch-visuelle Anzeigevorrichtung einen Projektor auf, der visuelle Informationen, wie Schrift oder Bilder direkt auf den berührten Bereich projiziert, wodurch die Effektivität der Lehr- und Lernvorrichtung verbessert wird. Es kann auch eine Rückseitenprojektion vorgenommen werden. Das setzt voraus, dass die Farbe und die Oberfläche des Modellbereiches auf die Projektion abgestimmt sind. Wenn z. B. der Bediener mit zunehmender Kraft auf den Lungenflügel des Modells drückt, werden tieferliegende Schichten projiziert und dargestellt. Es ist dem Fachmann klar, dass diese Projektionen auch auf separaten Bildschirmen angezeigt werden können.

Alternativ zum Einsatz eines mathematischen Modells von der Geometrie des 3D-Körpers können auch interessierende Berührungspunkte gespeichert sein. Diese Berührungspunkte werden mittels dem aus dem Stand der Technik bekannten Verfahren des "Teaching" implementiert, d. h. es wird mit dem Finger oder mit einem Instrument die zu "teachende" Stelle auf oder in dem 3D-Körper (z. B. eine Körperhöhlung) berührt, wobei eine vorbestimmte Kraft aufgebracht wird, die auf die Mehrkomponenten- Kraft- und -Momentenmessvorrichtung übertragen wird.

Die von der Mehrkomponenten- Kraft- und -Momentenmessvorrichtung ermittelten Kräfte und Momente werden mit den in der Datentafel gespeicherten Werten verglichen. Mittels des Zuordnungsalgorithmus wird die berührte Stelle ermittelt und mittels der Anzeigevorrichtung angezeigt. Im Gegensatz zu der Verwendung eines mathematischen Modells, bei der prinzipiell jeder beliebige Punkt ermittelt wird, sofern er durch das mathematische Modell erfaßt ist, können bei der alternativen Methode im Wesentlichen nur die vorher geteachten Punkte erkannt werden.

Der 3D-Körper ist über eine einzige Mehrkomponenten Kraft- und -Momentenmessvorrichtung fest mit einem Tisch, einer Wand, einer Decke oder sonstigem Untergrund verbunden. Aus Gründen der besseren mechanischen Stabilität können auch mehrere Kraftmessvorrichtungen verwendet werden. Mehrkomponenten Kraft- und -Momentenmessvorrichtung gehören zum Stand der Technik und werden als Module kommerziell angeboten. Es können auch zusätzliche Haltevorrichtungen verwendet werden, wenn es die Größe des 3D-Körpers erfordert. Diese Haltevorrichtungen müssen jedoch so konstruiert sein, dass der Kraft- und -Momentenmessvorrichtung oder den Kraftmessvorrichtungen die bei der Berührung erzeugte Kraft eindeutig und reproduzierbar zugeführt wird.

Der geschilderte Aufbau erlaubt es, die von einem Bediener berührten Bereiche, Punkte oder Elemente des 3D-Körpers visuell und/oder akustisch zu erläutern, zu beschreiben oder hervorzuheben. Die dargestellten Informationen können z. B. der Name, bestimmte Eigenschaften und Funktionen des identifizierten Bereichs bzw. Elements sein. Die Informationen werden beispielsweise über das Sichtgerät lesbar bzw. visuell erkennbar und/oder über Lautsprecher hörbar gemacht. Auch Filme oder grafische Animationen können je nach Einstellungen und Bedieneraktionen eingespielt werden. Ferner können der ermittelte Kraftbetrag und die ermittelte Kraftrichtung im Datenprozessor weiterverarbeitet und z. B. als Vektorpfeil grafisch animiert oder als akustisches Signal wiedergegeben werden. Bringt der Bediener z. B. zu hohe Kräfte auf das Modell auf, so kann ein visuelles oder akustisches Warnsignal oder eine Warnstimme dafür sorgen, dass der Bediener vom Modell abläßt, um eine Zerstörung des Modells oder Kraftsensors zu vermeiden.

Die mathematische Repräsentation des verwendeten 3D-Körpers kann mittels 3D-Scannern (CT, Kernspintomograph, Laserscanner, usw.) bestimmt und im Datenprozessor gespeichert werden. Beim Teachingverfahren werden die entsprechenden Bereiche berührt, die dabei auftretenden Kräfte und Momente gemessen und gespeichert und z. B. durch Texteingabe zugeordnet. Das Zuordnungsverfahren kann dabei durch moderne Techniken, z. B. durch künstliche neuronale Netze, unterstützt werden. Sobald in der späteren Anwendung vergleichbare Kräfte auftreten, wie im Teachingverfahren gemessen wurden, so wird das berührte Element automatisch erkannt.

Das geometrische Abbild des 3D-Körpers kann auch grafisch animiert dargestellt werden. Bei der Berührung bestimmter Bereiche können diese dann in der Animation z. B. farblich oder mittels eines Pfeils kenntlich gemacht werden. Es können auch feinste Details, die in der Nähe des Berührpunkts vorhanden sind, aber aus Platzgründen am realen 3D-Körper nicht markiert sind, über das Sichtgerät visualisiert werden.

Auf dem 3D-Körper oder innerhalb bestimmter vordefinierter Bereiche können verschiedene, optisch z. B. durch Farbe, Größe, Form, Beschriftung voneinander unterscheidbare Menüpunkte markiert sein. Bei der Berührung eines dieser Menüpunkte wird dann, je nach Art des Punktes, eine bestimmte Reaktion ausgelöst oder eine Menüfunktion ausgeführt, die akustisch oder grafisch angezeigt wird.

Alternativ oder ergänzend zu optisch unterscheidbaren Punkten können auch bestimmte Berührmuster mit typischen Kraft-Zeit-Verläufen zu verschiedenen grafischen und akustischen Reaktionen führen. Solche Berührmuster sind beispielsweise, lange oder kurze Kontakte, leichtes oder festes Anpressen, sowie Klopfzeichen mit unterschiedlicher Anzahl von Klopfschlägen, so wie z. B. der Doppelklick im Programm Windows zum Öffnen eine Datei führt.

Die Erfindung kann in zwei verschiedenen Modi bedient werden. Die oben beschriebene Funktion stellt den sogenannten Normalmodus dar, bei dem die Berührung eine graphische und/oder akustische Reaktion liefert. Im sogenannten Abfragemodus kann zunächst eine graphische oder akustische Aufforderung an den Bediener gegeben werden, z. B. einen bestimmten Modellbereich zu berühren. Der Bediener, z. B. ein zu prüfender Student, berührt dann den vermeintlichen Bereich und der Datenprozessor überprüft, ob der richtige Bereich berührt, d. h. erkannt wurde. Dabei kann auch kontrolliert werden, ob der Bediener die Bereiche in der richtigen Reihenfolge, und bei Bedarf auch mit den korrekten Zeitdauern, Kraftbeträgen und -richtungen, berührt hat. Der Erfolg, Mißerfolg oder eine Wertung wird dann dem Bediener über die grafische und/oder akustische Ausgabe mitgeteilt. In diesem Modus wird also der Bediener nach seinem Wissen abgefragt.

Nach Anspruch 2 ist der Projektor als Videoprojektor ausgebildet. Damit ist es z. B. möglich, den Bluttransport in der Lunge realitätsnah darzustellen, und somit den Informationseffekt weiter zu erhöhen.

Es ist weiterhin zu erwähnen, dass es eine Reihe von intelligenten Algorithmen zur Auswertung der Signale der Kraft- und Momentenmessvorrichtung gibt. Bei einem zerlegbaren anatomischen Modell vermindert sich z. B. bei der Herausnahme eines Organs die verbleibende Masse. Wenn z. B. die Massen der entfernbaren Organe unterschiedlich und bekannt sind, kann durch einfache Gewichtsklassifizierung das abgenommene Organ bestimmt werden. Es ist weiterhin möglich, die Änderung des Schwerpunktes des Modells bei der Entfernung eines Organs zur Bestimmung heranzuziehen. Wird ein bestimmtes Organ entnommen, so wird über die Kraft- und Momentenmessvorrichtung nicht nur eine Gewichtsverringerung registriert, sondern in der Regel auch ein Kippmoment festgestellt. Es ist ferner zur Verringerung der Verwechselungsgefahr möglich, Algorithmen zur Plausibilitätsprüfung vorzusehen. Wenn z. B. zwei Organe gleich schwer sind, aber hintereinander liegen und somit nur in der vorbestimmten Abfolge entnehmbar sind, kann somit das gerade entnommene Organ trotz Gewichtsgleichheit eindeutig identifiziert werden.

Die Erfindung wird nachfolgend anhand von Ausführungsbeispielen und schematischen Zeichnungen näher erläutert:
- Fig. 1a - d, f: zeigen eine Lehr- und Lernvorrichtung mit einem 3D-Körper in Form eines anatomischen Torso.
- Fig. 1e: zeigt die Interaktive Lehr- und Lernvorrichtung mit einem Projektor.
- Fig. 2: zeigt ein Modellohr für die Akupunkturausbildung.
- Fig. 3: zeigt eine Anwendung mit einem geteilten 3D-Körper.
- Fig. 4a, b: zeigen eine Anwendung aus dem nichtmedizinischen Bereich.

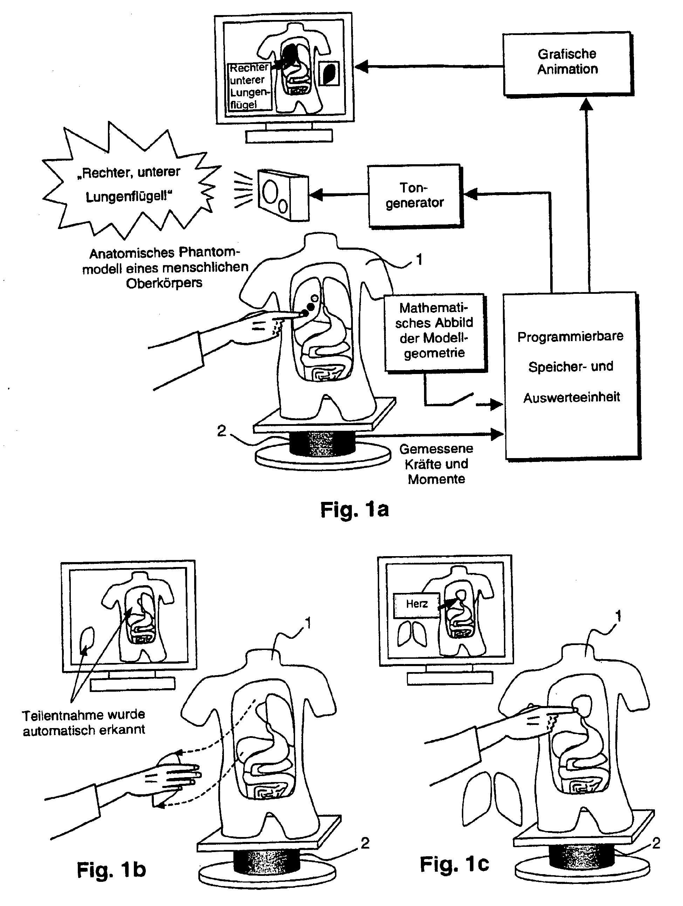

Fig. 1a zeigt einen künstlichen, offenen Oberkörper 1 (Phantomtorso) mit abnehmbaren Organen. In dieser Ausführungsform dient die Erfindung der Unterstützung der medizinischen Ausbildung. Der Torso ist auf einem 6-Komponenten-Kraft-Momenten-Sensor 2 montiert. Die Sensordaten münden in eine Datenverarbeitungsvorrichtung mit grafischer und akustischer Ausgabe. Auf den einzelnen Organen sind mehrere kleine Punkte in gelber, blauer und grüner Farbe aufgebracht. Berührt beispielsweise ein Medizinstudent eines der Organe oder einen bestimmten Organbereich, so wird ihm akustisch der Name des entsprechenden Organs bzw. Bereichs mitgeteilt. Gleichzeitig wird an einem Monitor der Torso als künstliches Abbild in schattierter Darstellungsweise wiedergegeben und der Name des berührten Bereichs eingeblendet. Die berührten Strukturen können in der grafischen Animation farblich hervorgehoben werden. Selbst sehr kleine anatomische Strukturen, wie z. B. Blutgefäße, Äderchen, Nervenverläufe, Muskelansatzstellen, können sichtbar gemacht werden. Berührt der Bediener dann den gelben Punkt auf dem künstlichen Organ des Torsos, wird ihm eine fotorealistische Darstellung des Organs bzw. Organbereichs auf dem Monitor präsentiert. Bei dem blauen Punkt werden physiologische Bedeutung und mögliche Pathologien grafisch wie auch akustisch beschrieben. Mit dem grünen Punkt können schließlich grafische Animationen und Filme mit Ton gestartet werden. Ferner kann mit steigender Druckkraft auf ein Organ oder die Haut des Torsomodells wie mit einem Nadelstich in die Tiefe eingetaucht werden. Dabei werden die verschiedenen Körperschichten und internen Ansichten grafisch animiert dargestellt. Im Abfragemodus (Kontrollmodus) kann eine künstliche Stimme den Bediener dazu auffordern, einen bestimmten anatomisch relevanten Bereich zu berühren. Die berührte Stelle wird dann mit der Datenverarbeitungsvorrichtung registriert und das Ergebnis dem Bediener akustisch und graphisch mitgeteilt und kommentiert.

Fig. 1b zeigt, wie der Bediener eines der Organe vom Torso entnimmt. Der Sensor registriert dadurch ein verändertes Gewicht und eine Schwerpunktverlagerung. Da die Gewichte der Einzelkomponenten bekannt sind, kann automatisch erkannt werden, welches Organ entnommen wurde. Die künstliche Darstellung des Torsos auf dem Monitor paßt sich dann entsprechend an den veränderten Torso an.

Fig. 1c zeigt, wie nach der Entnahme mehrere Organteile tiefer liegende Strukturen, die bisher nicht sichtbar waren, nun sichtbar werden und weiter durch Berührungen und mit akustisch-grafischer Unterstützung exploriert werden können.

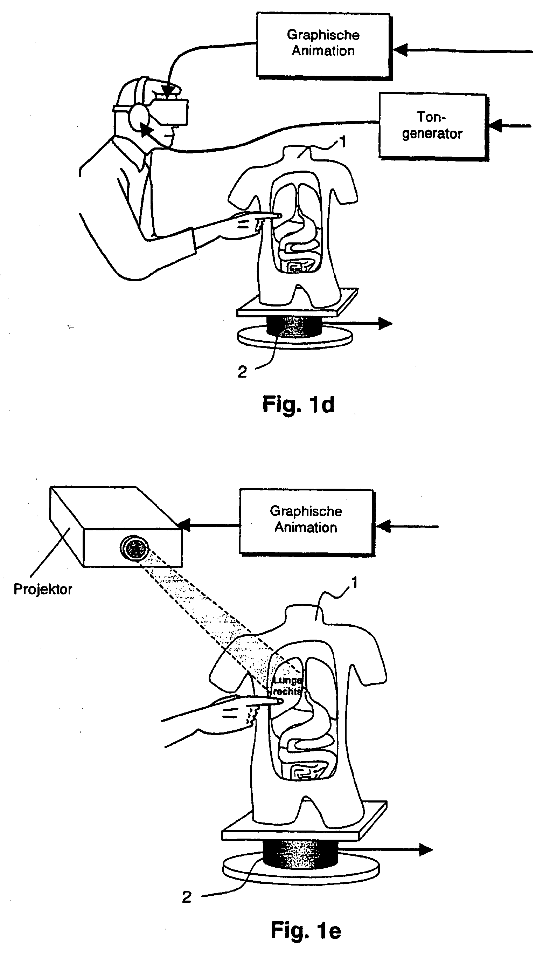

Fig. 1d zeigt ein verändertes graphisches und akustisches Display, bei dem ein Stereodatenhelm (Head-Mounted-Display, HMD) verwendet wird. Durch die Projektion zweier getrennter Bilder wird auf beide Augen wird ein realistischer dreidimensionaler Bildeindruck erzielt. Die Akustik wird dem Bediener über einen Stereokopfhörer vermittelt.

Fig. 1e zeigt die Lehr- und Lernvorrichtung, wobei die Text- und Bildinformation direkt auf das berührte Modell projiziert wird. Dies kann beispielsweise mit einem handelsüblichen Projektionsbeamer geschehen, wobei in diesem Beispiel die Modelloberfläche weiß oder einfarbig hell sein sollte.

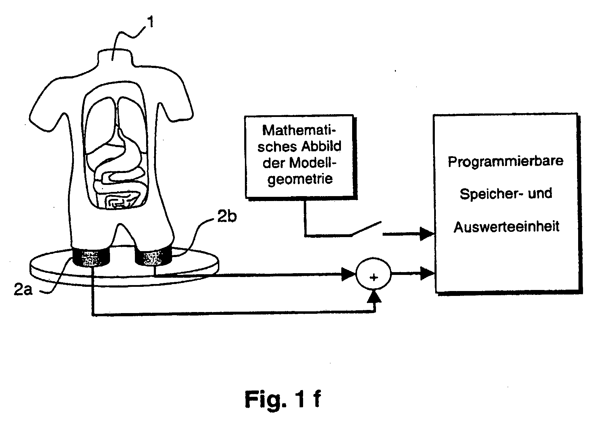

Fig. 1f zeigt eine Anwendung, bei der ein Phantomtorso mit zwei Mehrkomponenten-Sensoren 2a, 2b befestigt ist. Die entsprechenden Kraft- und Momentensignale werden vektoriell addiert und schließlich als Summensignal, das dem Signal eines einzelnen Sensors entspricht, in der Datenverarbeitungsvorrichtung weiterverarbeitet.

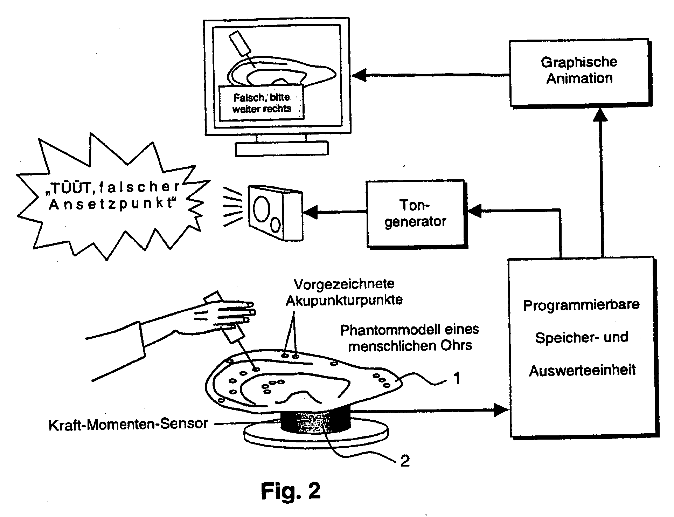

Fig. 2 zeigt eine Anwendung, bei der ein Phantomohr für die Akupunkturausbildung verwendet wird. Das Phantomohr ist mit einem Kraft-Momenten-Sensor 2 verbunden. Auf dem Ohr sind die wichtigsten Akupunkturpositionen markiert. Wenn der Bediener mit einem spitzen Gegenstand, der einer Akupunkturnadel gleicht, das Phantomohr berührt, so sagen ihm eine Stimme und das Monitorbild, welchen Namen und welche Bedeutung der anvisierte Punkt haben. Die akustische Ansage und Texteinblendungen sind bei diesem Anwendungsbeispiel auch deshalb sinnvoll, weil für die Bezeichnungen und Bedeutungen der Punkte auf dem Ohr nicht genügend Platz vorhanden ist. Ton und Bild können den Bediener auch bei der Suche eines gewünschten Punktes zurechtweisen. Dabei kann auch geprüft werden, wieviel Zeit der Bediener bei der Suche eines bestimmten Punktes benötigt, und in welcher Reihenfolge er die Punkte anfährt.

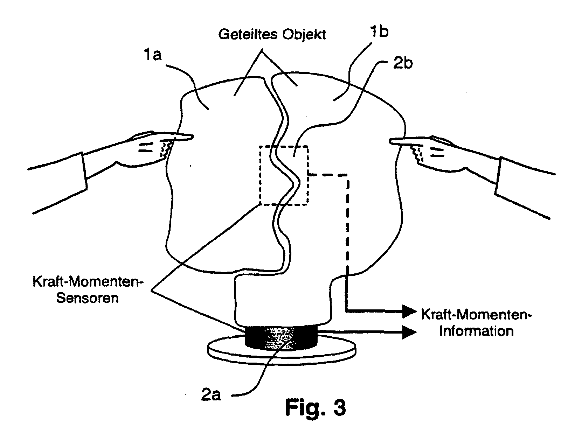

Fig. 3 zeigt eine Anwendung, bei der der 3D-Körper geteilt ist. Dabei ist der rechte Teil tischseitig mit einem Kraft-Momenten-Sensor 2a verbunden. Der linke Teil ist dagegen über einen weiteren Kraft-Momenten-Sensor 2b mit dem rechten Teil des 3D-Körpers verbunden. Der Sensor 2b stellt das einzige Verbindungselement zwischen dem rechten und linken Teil des 3D-Körpers dar. Durch diese Anordnung können zwei Kräfte - eine je Teil - eingeleitet und lokalisiert werden. Dadurch sind auch beidhändige Zeigeaktionen möglich. Bei der Datenverarbeitung können die am linken Teil angreifenden Kräfte eindeutig mit dem verbindenden Sensor 2b weiterverarbeitet werden. Da jedoch der tischseitige Sensor 2a die Kräfte beider Teile des 3D-Körpers aufnimmt, müssen zur Lokalisierung des rechten Kontaktpunkts beide Sensorausgänge miteinander kombiniert werden. Dazu werden die Kraft- und Momenten-Daten des verbindenden Sensors komponentenweise, d. h. vektoriell von den Kraft- und Momenten-Daten des tischseitigen (in einem gemeinsamen Koordinatensystem) subtrahiert.

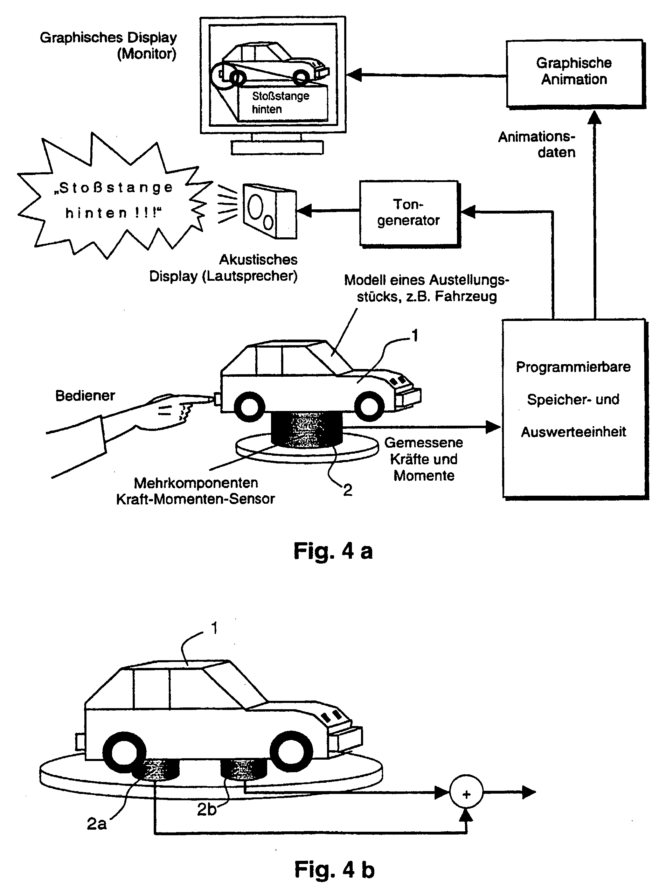

Fig. 4a zeigt ein Modellauto, das auf einem 6-Komponenten-Kraft-Momenten-Sensor 2 montiert ist. Die Kraft-Momenten-Daten werden in eine Datenverarbeitungsvorrichtung geleitet, die über einen Tongenerator (Soundkarte) eine akustische Ausgabemöglichkeit aufweist. Die Datenverarbeitungsvorrichtung beinhaltet ein mathematisches Abbild der Modellautogeometrie. Das Modellauto setzt sich aus einer Vielzahl von kleinen Komponenten wie z. B. Rädern, Türen, Stoßstangen, Scheinwerfer zusammen. Sobald der Bediener (Museumsbesücher), eines der Komponenten einmal kurz mit seinem Finger berührt, hört dieser über den Lautsprecher den Namen der berührten Komponente. Klopft er zwei Mal kurz hintereinander auf dasselbe Element, so wird ihm die Funktion kurz näher erläutert. Gleichzeitig mit der Übermittlung der akustischen Information erscheint auf einem Monitor eine animierte Abbildung des Modells mit einer farblichen Hervorhebung des berührten Teils und einer Textbox, in der die Funktion näher erklärt wird. Ein einmaliges langes Drücken läßt einen kurzen Film starten, in dem der Herstellungsprozeß des berührten Teils geschildert wird.

Fig. 4b zeigt eine Anwendung, bei der das Modellauto mit zwei Mehrkomponenten 2a, 2b befestigt ist. Die entsprechenden Kraft- und Momentensignale werden vektoriell addiert und schließlich als Summensignal, welches dem Signal eines einzelnen Sensors entspricht, in der Datenverarbeitungsvorrichtung weiterverarbeitet.

Es ist klar, dass anstelle des Modellautos auch ein realer Gegenstand, z. B. auch ein Auto mit der Erfindung ausgerüstet werden kann. Der besondere Wert im Anwendungsbereich Museum, Ausstellung oder Messe besteht zweifellos in der neuartigen Interaktion des ausgestellten Gegenstandes mit dem Publikum, dem es bisher häufig nicht gestattet wurde, die Ausstellungsstücke zu berühren.

## Patentansprüche

1. Lehr- und Lernvorrichtung mit folgenden Merkmalen:
- einem zu berührenden 3D-Körper (1), der über
- wenigstens eine Mehrkomponenten-Kraft- und Momentenmessvorrichtung (2) fest mit der Umgebung verbunden ist,
- einer Speicher- und Auswerteelektronik,
- einer optisch-visuellen und/oder akustischen Anzeigevorrichtung, wobei
- die Mehrkomponenten-Kraft- und Momentenmessvorrichtung (2) die bei einer Berührung des 3D-Körpers (1) auftretenden Kräfte und Momente in elektrische Messsignale umwandelt und der Speicher- und Auswerteelektronik zuführt, wobei
- in der Speicher- und Auswerteelektronik ein mathematisches Modell von der Geometrie des 3D-Körpers implementiert ist und ein Algorithmus, der aus den bei der Berührung ermittelten Kräften und Momenten die Berührungsstelle am 3D-Körper errechnet oder
- in dem Speicher der Speicher- und Auswerteelektronik Kraft- und Momentenmesssignale vorbestimmter Berührungspunkte gespeichert sind und ein Zuordnungsalgorithmus implementiert ist, der aus den bei der Berührung ermittelten Kräften und Momenten die Berührungsstelle am 3D-Körper zuordnet,
und wobei
- die Berührungsstelle am 3D-Körper als Signal mittels der optisch-visuellen und/oder akustischen Anzeigevorrichtung der berührenden Bedienperson angezeigt wird,
**dadurch gekennzeichnet, dass** die optisch-visuelle Anzeigevorrichtung einen Projektor aufweist, welcher visuelle Informationen, wie Schrift oder Bilder, direkt auf einen berührten Bereich projiziert.

2. Lehr- und Lernvorrichtung nach Anspruch 1, **dadurch gekennzeichnet, dass** der Projektor ein Videoprojektor ist.

## Claims

1. A teaching and learning apparatus with the following features:
- a 3D-body (1) to be touched, which is
- firmly connected to the environment via at least one multicomponent-force- and moment measuring device (2),
- a storage- and evaluation electronics,
- an optical-visual and/or acoustic display device, wherein
- the multicomponent-force- and moment measuring device (2) converts the forces and moments occurring at a touch of the 3D-body into electrical measurement signals and directs same to the storage- and evaluation electronics,
wherein
- a mathematical model of the geometry of the 3D-body is implemented in the storage- and evaluation electronics and an algorithm, which calculates the point of touch at the 3D-body from the forces and moments being determined at the touch, or
- in the memory of the storage- and evaluation device force- and moment signals of predetermined points of touch are stored and a mapping algorithm is implemented, which allocates the point of touch at the 3D-body from the forces and moments being determined at the touch,
and wherein
- the point of touch at the 3D-body is displayed as a signal by means of the optical-visual and/or acoustic display device of the touching operator,
**characterized in that** the optical-visual display device comprises a projector, which projects visual information, such as scripture or images, directly on a touched area.

2. The teaching and learning apparatus according to claim 1, **characterized in that** the projector is a video projector.

## Revendications

1. Dispositif de formation et d'apprentissage présentant les caractéristiques suivantes:
- un corps 3D (1) à toucher qui est relié fixement à l'environnement par au moins un dispositif de mesure de force et de couple à plusieurs composantes (2),
- une électronique d'enregistrement et d'évaluation,
- un dispositif d'affichage acoustique et/ou visuel optique,
- le dispositif de mesure de force et de couple à plusieurs composantes (2) convertissant les forces et couples survenant lors d'un toucher du corps 3D (1) en signaux de mesure électriques et les transmettant à l'électronique d'enregistrement et d'évaluation,
- un modèle mathématique de la géométrie du corps 3D étant implémenté dans l'électronique d'enregistrement et d'évaluation et un algorithme qui calcule à partir des forces et couples déterminés lors du toucher le point de contact sur le corps 3D ou
- des signaux de mesure de force et couple de points de contact prédéterminés étant enregistrés dans la mémoire de l'électronique d'enregistrement et d'évaluation et un algorithme d'association étant implémenté, auquel est associé le point de contact sur le corps 3D à partir des forces et couples déterminés lors du toucher,
et
- le point de contact étant affiché sur le corps 3D en tant que signal à l'aide du dispositif d'affichage acoustique et/ou visuel optique de l'opérateur qui touche,
**caractérisé en ce que** le dispositif d'affichage visuel optique présente un projecteur qui projette des informations visuelles telles qu'une écriture ou des images directement sur une zone touchée.

2. Dispositif de formation et d'apprentissage selon la revendication 1, **caractérisé en ce que** le projecteur est un vidéoprojecteur.
